# EUROPÄISCHE PATENTSCHRIFT

(11) **EP 2 063 570 B1**
(45) Veröffentlichungstag und Bekanntmachung des Hinweises auf die Patenterteilung: **21.10.2015**
(21) Anmeldenummer: 08019606.6
(22) Anmeldetag: 10.11.2008
(51) Int. Cl.: H04L 12/24, H04L 12/26

(54) **Steuerungsvorrichtung**
Control device
Dispositif de commande

(30) Priorität: 22.11.2007 DE 102007056496
(43) Veröffentlichungstag der Anmeldung: 27.05.2009
(73) Patentinhaber: Phoenix Contact GmbH & Co. KG, 32825 Blomberg (DE)
(72) Erfinder: Grinder, Sven, 32791 Lage (DE)
(74) Vertreter: Bill, Burkart Hartmut

(56) Entgegenhaltungen:
- EP-A1- 1 615 376
- DE-A1-102006 057 133
- US-A- 5 793 646
- US-A1- 2007 103 325
- MICHAEL KUNES ET AL: "Fieldbus-Internet Connectivity: The SNMP Approach" IEEE TRANSACTIONS ON INDUSTRIAL ELECTRONICS, IEEE SERVICE CENTER, PISCATAWAY, NJ, USA, Bd. 48, Nr. 6, 1. Dezember 2001 (2001-12-01), XP011023899 ISSN: 0278-0046
- HUSEMANN ET AL: "A multi-protocol real-time monitoring and validation system for distributed fieldbus-based automation applications" CONTROL ENGINEERING PRACTICE, PERGAMON PRESS, OXFORD, GB LNKD- DOI:10.1016/J.CONENGPRAC.2006.11.016, Bd. 15, Nr. 8, 5. Mai 2007 (2007-05-05), Seiten 955-968, XP022060130 ISSN: 0967-0661
- ALOISIO A ET AL: "Data acquisition and monitoring for the KLOE detector" NUCLEAR INSTRUMENTS & METHODS IN PHYSICS RESEARCH, SECTION - A:ACCELERATORS, SPECTROMETERS, DETECTORS AND ASSOCIATED EQUIPMENT, ELSEVIER, AMSTERDAM, NL LNKD- DOI:10.1016/J.NIMA.2003.06.013, Bd. 516, Nr. 2-3, 11. Januar 2004 (2004-01-11), Seiten 288-314, XP004482779 ISSN: 0168-9002

## Beschreibung

Die vorliegende Erfindung betrifft eine Steuerungsvorrichtung.

Zur Steuerung von technischen Prozessen wie beispielsweise auf elektronischen Vorrichtungen ablaufenden Computerprogrammen können Steuerungen eingesetzt werden, welche die Steuerung auf der Basis von Steuerungsparametern bzw. von Prozessparametern, die mittels einer Ethernet-Netzwerkverbindung übermittelt werden können, durchführen.

Bekannte Ethernet-Komponenten wie beispielsweise PCs (Personal Computer), Drucker, Buskoppler, Steuerungen oder Switches verfügen dabei oft über Agenten (Server), die die Kommunikation unter Verwendung des Simple Network Management Protocols (SNMP) durchführen. Das Simple Network Management Protocol wird in Netzwerken zum Verwalten der unterschiedlichen Netzwerk-Teilnehmer verwendet und bietet einen standardisierten Weg, Daten auszutauschen, wobei dieses Protokoll nur die Art und Weise des Zugriffs festlegt. Das Netzwerk kann dabei von einer zentralen Station aus, beispielsweise von einem PC mit einer entsprechenden Management-Software, überwacht werden. Hierzu werden zu den Teilnehmern SNMP-Anfragen gesendet, um Daten wie beispielsweise Informationen über eine Komponenten-Auslastung oder einen Fehler-Zähler anzufordern. Aufgrund der gemeldeten Daten ist eine Überwachung eines Netzwerkes möglich, sodass Störungen rechtzeitig erkannt werden können. Zusätzlich kann über das SNMP auch steuernd auf Netzwerkteilnehmer zugegriffen werden.

Bekannte SNMP-Agenten sind in der Lage, aufgrund besonderer Ereignisse eine Meldung (Trap) an beispielsweise ein Management-Tool (Client) zu verschicken, woraufhin das Management-Tool weitere Aktionen wie das Lesen oder das Schreiben von Objekten ausführt. Das SNMP nutzt für die Kommunikation das verbindungslose UDP/IP (User Datagram Protocol/Internet Protocol) über die Ports 161 und 162.

Das SNMP kann ebenfalls in Steuerungssystemen eingesetzt werden. Zum Zugriff auf Prozessdaten kann ein Client gegenwärtig jedoch nur über ein OPC-Protokoll (OLE for Process Control) auf einen OPC-Server des jeweiligen Steuerungsherstellers oder von dort über ein proprietäres Protokoll auf die Steuerung zugreifen. Daher muss beispielsweise ein PC-Programm über das SNMP einen SNMP-OPC-Gateway ansprechen, der mit einem OPC-Server in Verbindung tritt, der wiederum über das OPC-Protokoll auf die Steuerung zugreift. Dieses Kommunikationskonzept ist jedoch unflexibel und nicht effizient.

Die Druckschrift US 5,793,646 offenbart ein Außenanlagensteuerungssystem (Facility Environmental Control, FEC), das das Simple Network Management Protocol verwendet. Das FEC-System umfasst eine Management Information Base, ein Steuersystem zum Steuern einer Mehrzahl von FEC-Vorrichtungen und einen Steuersystemagenten, welcher SNMP-Nachrichten über einen Management-Knoten empfängt.

Die Druckschrift von Kunes, M. und Sauter, T., Fieldbus-Internet Connectivity: The SNMP Approach, IEEE Transactions on Industrial Electronics, Vol. 48, Issue No. 6, December 2001, offenbart eine Verwendung des SNMP zur Feldbus-Internet-Konnektivität.

In der Druckschrift von Hüsemann et al, A multi-protocol real-time monitoring and validation system for distributed fieldbus-based automation applications, Control Engineering Practice, Bd. 15, Nr. 8, Mai 2007, Seiten 955-968, wird eine Verwendung von Gateways als Echtzeit-Schnittstelle zu verschiedenen Feldbus-Systemen beschrieben.

Die Druckschrift Aloisio et al, Data acquisition and monitoring for the KLOE detector, Nuclear Instruments & Methods in Physics Research, A 516, Januar 2004, Seiten 288-314, behandelt eine weitere Verwendung des SNMP zur zentralen Ansteuerung einzelner proprietärer Steuerungssysteme.

Es ist die Aufgabe der Erfindung, ein effizientes Konzept zur Kommunikation von Daten zwischen Steuervorrichtungen zu schaffen.

Diese Aufgabe wird durch die Merkmale der unabhängigen Patentansprüche gelöst.

Die vorliegende Erfindung basiert auf der Erkenntnis, dass eine effiziente Kommunikation zwischen Steuervorrichtungen bzw. zwischen Steuerungen direkt auf der Basis des Simple Network Management Protocols durchgeführt werden kann. Das bedeutet, dass die Steuerungen direkt miteinander kommunizieren und über das SNMP direkt Daten wie Prozess- oder Steuerdaten austauschen.

Das SNMP kann beispielsweise als Funktionsbaustein in einem Steuerungsprogramm ablaufen, so dass der Zugriff auf Prozessdaten der Steuerung auf der Basis des SNMP z. B. über eine Internet- oder eine Ethernet-Verbindung von einer zentralen Leitwarte aus möglich ist. Ein Benutzer kann beispielsweise eine virtuelle Datenbank nach eigenen Bedarfskriterien festlegen und diese durch die erfindungsgemäße Freiheit im Zugriff auf die Steuerungsvariablen der Steuerungsvorrichtung zukommen lassen.

Die Erfindung betrifft gemäß einem Aspekt eine Steuerungsvorrichtung gemäß Anspruch 1.

Gemäß einer Ausführungsform ist die Bereitstellungseinrichtung ausgebildet, die Steuerdaten zu der Netzwerkeinrichtung zu senden oder die Steuerdaten von der Netzwerkeinrichtung zu empfangen.

Gemäß einer Ausführungsform umfasst die Netzwerkeinrichtung eine Protokolleinrichtung, die programmtechnisch eingerichtet ist, das Simple Network Management Protocol ablaufen zu lassen.

Gemäß einer Ausführungsform umfasst die Netzwerkeinrichtung einen Sender und/oder einen Empfänger zum Kommunizieren über ein Kommunikationsnetzwerk, beispielsweise über ein Ethernet-Kommunikationsnetzwerk, unter Verwendung des Simple Network Management Protocols.

Gemäß einer Ausführungsform umfassen die Steuerdaten Prozessdaten, Prozessparameter oder Steuerparameter.

Gemäß einer Ausführungsform umfasst die Bereitstellungseinrichtung eine Speichereinrichtung zum Speichern der Steuerdaten in einer Datenbank.

Gemäß einem weiteren Aspekt betrifft die Erfindung ein Steuerungssystem gemäß Anspruch 7.

Gemäß einem weiteren Aspekt betrifft die Erfindung eine Verwendung des Simple Network Management Protocols gemäß Anspruch 8.

Gemäß einem weiteren Aspekt betrifft die Erfindung ein Steuerungsverfahren gemäß Anspruch 9.

Gemäß einem weiteren Aspekt betrifft die Erfindung eine programmtechnisch eingerichtete Vorrichtung, gemäß Anspruch 10.

Gemäß einem weiteren Aspekt betrifft die Erfindung ein Computer-Programm gemäß Anspruch 11.

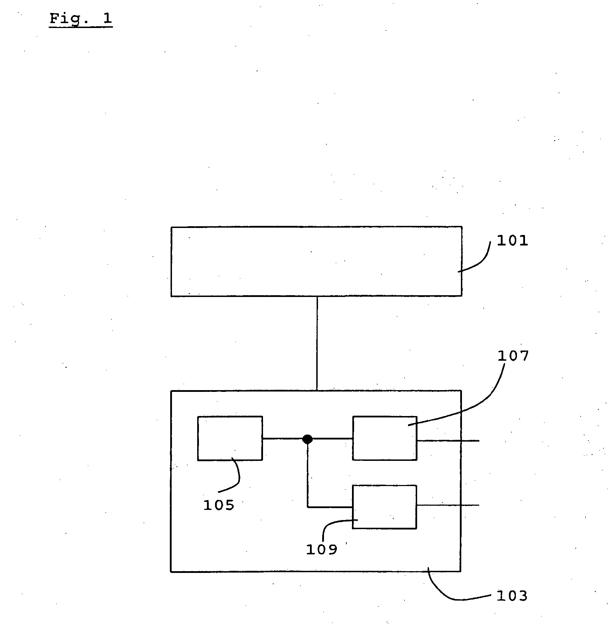

Weitere Ausführungsbeispiele werden anhand der beiliegenden Figur 1 erläutert, welche ein Blockdiagramm einer Steuerungsvorrichtung zeigt.

Die Steuerungsvorrichtung umfasst eine Bereitstellungseinrichtung 101 und eine Netzwerkeinrichtung 103, die miteinander gekoppelt sind. Die Bereitstellungseinrichtung 101 stellt Steuer- oder Prozessdaten zur Prozesssteuerung bereit, wobei die Netzwerkeinrichtung 103 unter Verwendung des Simple Network Management Protocols die Steuerdaten aussenden oder weitere Steuerdaten empfangen kann. Die Steuerungsvorrichtung aus Fig. 1 kann ferner ausgelegt sein, die Prozesssteuerung durchzuführen. Hierzu kann die Steuerungsvorrichtung ferner ein Steuerungselement aufweisen, das die Prozesssteuerung unter Verwendung der bereitgestellten oder empfangenen Steuerdaten durchführen kann.

Die Netzwerkeinrichtung 103 kann ferner eine Protokolleinrichtung 105 umfassen, welche durch ihre programmtechnische Einrichtung ausgebildet ist, das Simple Network Management Protocol, das als Programmbaustein innerhalb eines Steuerungsprogramms eingebettet sein kann, ablaufen zu lassen. Die dargestellte Netzwerkeinrichtung 103 umfasst ferner einen Empfänger 107 und einen Sender 109, die mit der Protokolleinrichtung 105 verbunden sein können und die vorgesehen sind, unter Verwendung des SNMP Daten zu empfangen oder auszusenden. Der Empfänger 107 und der Sender 109 können beispielsweise ausgebildet sein, die Daten per UMTS oder WLAN (Wireless Local Access Network) drahtlos auszusenden. Darüber hinaus können der Empfänger 107 und der Sender 109 vorgesehen sein, die Daten drahtgebunden über beispielsweise ein Ethernet-Kommunikationsnetzwerk zu empfangen oder auszusenden.

Die in der Fig. 1 dargestellte Steuerung kann mit einer weiteren Steuerung, die beispielsweise wie die in Fig. 1 dargestellte Steuerung ausgelegt sein kann, Herstellerübergreifend über das SNMP direkt kommunizieren. Bevorzugt wird den Steuerungen eine entsprechende, in der Figur nicht dargestellte Server- und/oder Client-Funktionalität zur Verfügung gestellt. Mit anderen Worten kann die in Fig. 1 dargestellte Steuerung als ein Server und/oder als ein Client arbeiten. Die Verwendung des SNMP ermöglicht den Einsatz eines Standardprotokolls, das beispielsweise im so genannten Request for Comment (RFC) beschrieben und weiterentwickelt sein kann. Darüber hinaus kann die Struktur der Management-Information-Base (MIB) so durch den Anwender beliebig festgelegt werden. Die MIB kann ferner in einem Steuerungsprogramm als SNMP-Client und/oder SNMP-Server umgesetzt werden.

Bevorzugt können einem Anmelder für Steuerungen ein SNMP-Server und/oder ein SNMP-Client zur Verfügung gestellt werden, die dann von dem Benutzer genutzt werden können. Dabei kann der Benutzer über die Art und über die Anzahl der Objekte die MIB definieren und die Datenzugriffe beispielsweise in einem Anwendungsprogramm (Applikationsprogramm) zu realisieren. Die SNMP-Agenten und -Clients sowie der Trap-Sender und -Empfänger können ferner als Funktionsbausteine ausgelegt und angeboten werden.

Darüber hinaus ist es möglich, neben dem SNMP-Agenten auch universellen SNMP-Clients und Trap-Sendern und/oder - Empfänger als Bausteine zu realisieren. Diese Bausteine können beispielsweise in einer SNMP-Baustein-Bibliothek zusammengefasst werden.

Das erfindungsgemäße Konzept bietet einem Benutzer die Möglichkeit, fertige Programm-Teile für sein Steuerungsprogramm, die den Zugriff auf das Netzwerk und die Behandlung des SNMP übernehmen, einzusetzen. Der Benutzer kann sich dann auf seine Anwendung und die Programmierung konzentrieren. Besteht der Wunsch, Daten mit einer anderen Steuerung, mit einer anderen I/O-Vorrichtung oder mit einem PC-Programm auszutauschen, so kann der Benutzer die bereitgestellten Bausteine flexibel und effizient einsetzen. Es ist dem Benutzer ferner freigestellt, welche Daten er überträgt. Es können beispielsweise Informationen von Ein- und Ausgabeeinheiten sein, die mit der Steuerung verbunden sein können. So können zum Beispiel Temperaturwerte oder Schalterzustände ohne weitere Bearbeitung direkt über das SNMP verteilt werden. Es können aber auch Informationen aus dem Steuerungsprogramm sein, die durch das Steuerungsprogramm berechnet bzw. bereitgestellt werden. Bei den Daten kann es sich um eine Geschwindigkeit, um eine Zykluszeit der Steuerung, um eine Laufzeit der Steuerung, um den Namen des Programmierers des Steuerungsprogramms oder um eine Position eines Transportgutes auf einer Förderstrecke handelt

Darüber hinaus können die Daten in einer virtuellen Datenbank, z.B. in der bereits erwähnten Management Information Base (MIB) abgelegt werden. Die Daten können in einer Textdatei in der Abstract Syntax Notation (ASN1) beschrieben sein, wobei ein Datensatz ein Gerätename, eine Zeitdauer, eine Uhrzeit, ein Zählerstand oder auch eine Temperatur sein kann, wodurch festgelegt wird, welche Objekte existieren und wie die Werte zu interpretieren sind. Die MIB ist beispielsweise eine Datenbank, in der die Daten in Form einer Baumstruktur organisiert sind. Einige oder alle Knoten und/oder Äste des Baumes oder Teilbereiche der Datenbank können in Standard-MIBs beschrieben werden. Im Beispiel einer Steuerung kann beispielsweise ein Hersteller eine MIB veröffentlichen, die eine Textdatei mit der Beschreibung der implementierten Objekte aufweist.

Die erfindungsgemäße SNMP-Kommunikation kann gemäß einer Ausführungsform wie folgt ablaufen: Ein SNMP-Client fragt nach einem Objekt bei einem SNMP-Agenten an. Der SNMP-Agent benötigt jedoch nicht notwendigerweise eine Datenbank, um diese Anfrage zu beantworten. Stattdessen kann der SNMP-Agent die Anfrage entgegennehmen, die Information über das angefragte Objekt extrahieren und die Daten abrufen. Im Falle des SNMP-Agenten auf der Steuerungsseite kann der Agent dann zum Beispiel auf eine Variable des Steuerungsprogramms zugreifen. Die Antwort kann von dem SNMP-Agenten als ein SNMP-Paket über das Netzwerk zu dem jeweiligen Client gesendet werden.

Gemäß einer weiteren Ausführungsform können zwei oder mehrere Steuerungen gleichzeitig arbeiten und mit einem Netzwerk verbunden sein. Jede Steuerung umfasst Ein- und Ausgabe-Einheiten wie beispielsweise Schalter oder Lampen und liest die Eingangsdaten regelmäßig ein, verarbeitet die Werte und schreibt Werte auf die Ausgänge. Benötigt beispielsweise die Steuerung A einen Wert der Steuerung B oder möchte sie in den Programmablauf von der Steuerung B eingreifen, so sendet die Steuerung A eine Anfrage unter Verwendung des SNMP an die Steuerung B. Die Steuerung B empfängt die Nachricht und bearbeitet sie, wobei die Steuerung B einen angefragten Wert aus ihrem Programm bzw. aus der Laufzeit-Umgebung an die Steuerung A zurücksendet (SNMP Get Anfrage) oder einen von der Steuerung A übermittelten Wert in ihr Programm (SNMP Set Dienst) übernimmt und den Erhalt bestätigt.

Weiterhin kann die Steuerung A beim Auftreten von besonderen Ereignissen in ihrem Programmablauf eine besondere Meldung (SNMP Trap) an die Steuerung B senden. An die Stelle der Steuerungen A oder B kann jedoch auch ein beliebiger SNMP-fähiger Netzwerkteilnehmer treten.

Gemäß einer Ausführungsform kann bei einem universellen SNMP-Agenten der Benutzer seine eigenen Teilbereiche in der MIB festlegen und die Objekte dann in dem Steuerungsprogramm implementieren. Das bedeutet, der Benutzer gibt einem SNMP-Agenten die SNMP-Objekte bekannt und sorgt für den Zugriff auf die Daten des Steuerungsprogramms. Dadurch wird es dem Benutzer ermöglicht, beliebige SNMP-Objekte, eigendefinierte Objekte oder auch Objekte aus den Standard MIBs zu nutzen. Die vorstehenden Ausführungen gelten sinngemäß auch für die SNMP-Clients. Mit dem Baustein SNMP Client kann der Benutzer auf beliebige SNMP-Objekte der anderen Teilnehmer im Netzwerk zugreifen. Mit dem Begriff "universell" ist gemeint, dass der Benutzer vollkommen frei in der Verwendung des Simple Network Management Protocols ist. Im Unterschied hierzu lassen bekannte Netzwerk-Komponenten es nicht zu, dass der Benutzer eigene SNMP Objekte einem SNMP-Agenten eines jeweiligen Geräts hinzufügt, weil die Menge der SNMP-Objekte immer durch den Hersteller der Komponente festgelegt wird. Eine Abbildung von beliebigen Informationen aus dem Steuerungsprogramm auf das SNMP ist nur mit zusätzlichen PC-Programmen möglich.

Erfindungsgemäß kann das SNMP auch für die Überwachung der Teilnehmer oder für die Steuerung als bzw. der Teilnehmer in einem Netzwerk eingesetzt werden. Zusätzlich können Informationen aus einem Steuerungsprogramm in Form von Daten aus dem zu steuernden Prozess über SNMP zugreifbar gemacht werden. So kann beispielsweise in einem Zug-Wagon ein Schaltschrank mit einer Steuerung, die für die Temperatursteuerung bzw. -regelung vorgesehen ist, eingesetzt werden, auf die von einem zentralen Ort aus beispielsweise zum Auslesen der Wagontemperatur zugegriffen werden kann. Das SNMP kann in diesem Fall zu einer direkten Kommunikation mit der Steuerung beispielsweise von einem PC-Programm aus eingesetzt werden.

Das SNMP kann erfindungsgemäß ferner eingesetzt werden, einen direkten Datenaustausch zwischen Steuerungen zu ermöglichen. Dabei sendet beispielsweise die Steuerung A einen Datensatz "Außen-Temperatur" an die Steuerung B, die die Daten weiter verarbeiten kann. Dieser direkte Datenaustausch zwischen Steuerungen ist mit den bekannten Steuerungskommunikationskonzepten über ein Standardprotokoll nicht realisierbar. Die Erfindung schafft somit eine einfache Kommunikationsplattform auch über Netzwerk-Grenzen über Router oder Firewalls hinaus.

Für die erfindungsgemäße Verwendung des SNMP kommen alle bekannten Steuerungsgebiete in Frage. Beispielsweise kann das SNMP erfindungsgemäß in einem Förderband mit mehreren Steuerungen, die Daten über die Förderstrecke oder das zu transportierende Gut austauschen, oder im Bereich des Gebäudemanagements, wo Steuerungen den Füllstand der Regenwasser-Zisternen an das Hauswasserwerk melden, oder in einem Eisenbahn-Zug, wo Steuerungen in den Waggons die Soll-Temperaturvorgaben über das SNMP von einer zentralen Steuerung beispielsweise in der Lok bekommen, oder in Straßentunneln, wo von einer zentralen Steuerung in der Leitwarte die lokalen Steuerungen im Tunnel angesprochen werden und z.B. die Luftwerte abgefragt werden, eingesetzt werden.

## Patentansprüche

1. Steuerungsvorrichtung, die ausgebildet ist, als Server und als Client mit einer weiteren Steuerungsvorrichtung über ein Kommunikationsnetzwerk unter Verwendung des Simple Network Management Protocols zu kommunizieren, und umfassend:
eine Bereitstellungseinrichtung (101) zum Bereitstellen von Steuerdaten zur Prozesssteuerung; und
eine Netzwerkeinrichtung (103) zum Senden oder Empfangen der Steuerdaten unter Verwendung des Simple Network Management Protocols
wobei die Steuerungsvorrichtung ferner einen Server und einen Client zum Kommunizieren über das Kommunikationsnetzwerk unter Verwendung des Simple Network Management Protocols umfasst.

2. Steuerungsvorrichtung gemäß Anspruch 1, wobei die Bereitstellungseinrichtung (101) ausgebildet ist, die Steuerdaten zu der Netzwerkeinrichtung (103) zu senden oder die Steuerdaten von der Netzwerkeinrichtung zu empfangen.

3. Steuerungsvorrichtung gemäß Anspruch 1 oder 2, wobei die Netzwerkeinrichtung (103) eine Protokolleinrichtung (105) umfasst, die programmtechnisch eingerichtet ist, das Simple Network Management Protocol ablaufen zu lassen.

4. Steuerungsvorrichtung gemäß einem der Ansprüche 1 bis 3, wobei die Netzwerkeinrichtung (103) einen Sender (109) und/oder einen Empfänger (107) zum Kommunizieren über ein Kommunikationsnetzwerk unter Verwendung des Simple Network Management Protocols umfasst.

5. Steuerungsvorrichtung gemäß einem der Ansprüche 1 bis 4, wobei die Steuerdaten Prozessdaten, Prozessparameter oder Steuerparameter umfassen.

6. Steuerungsvorrichtung gemäß einem der Ansprüche 1 bis 5, wobei die Bereitstellungseinrichtung (101) eine Speichereinrichtung zum Speichern der Steuerdaten in einer Datenbank umfasst.

7. Steuerungssystem zur Steuerung einer ersten und einer zweiten Steuerungsvorrichtung, wobei die erste und zweite Steuerungsvorrichtung zur Prozesssteuerung unter Verwendung von Steuerdaten vorgesehen sind, und wobei wenigstens eine der Steuerungsvorrichtungen folgende Merkmale umfasst:
eine Bereitstellungseinrichtung zum Bereitstellen der Steuerdaten;
eine Netzwerkeinrichtung zum Übermitteln der Steuerdaten an die jeweils andere Steuerungsvorrichtung über ein Kommunikationsnetzwerk unter Verwendung des Simple Network Management Protocols; und
ferner einen Server und einen Client zum Kommunizieren über das Kommunikationsnetzwerk unter Verwendung des Simple Network Management Protocols umfasst.

8. Verwendung des Simple Network Management Protocols zum Kommunizieren von Steuerdaten zwischen einer ersten Steuerungsvorrichtung gemäß einem der Ansprüche 1 bis 6 und einer zweiten Steuerungsvorrichtung gemäß einem der Ansprüche 1 bis 6 über ein Kommunikationsnetzwerk.

9. Steuerungsverfahren unter Verwendung von Steuerdaten und einer Steuerungsvorrichtung, die einen Server und einen Client umfassend ausgebildet ist, als Server und als Client mit einer weiteren Steuerungsvorrichtung über ein Kommunikationsnetzwerk unter Verwendung des Simple Network Management Protocols zu kommunizieren, wobei ein technischer Prozess unter Verwendung der Steuerdaten gesteuert wird, mit:
Bereitstellen der Steuerdaten zur Prozesssteuerung; und
Senden der Steuerdaten an die weitere Steuerungsvorrichtung oder Empfangen von weiteren Steuerdaten von der weiteren Steuerungsvorrichtung unter Verwendung des Simple Network Management Protocols.

10. Programmtechnisch eingerichtete Vorrichtung, die ausgebildet ist, ein Computer-Programm zum Ausführen eines der Verfahren gemäß Anspruche 9 ablaufen zu lassen.

11. Computer-Programm zum Ausführen eines der Verfahren gemäß Anspruch 9, wenn das Computer-Programm auf einem Computer abläuft.

## Claims

1. Control device constructed to communicate as a server and as a client with another control device via a communications network using the Simple Network Management Protocol,
comprising:
a supply device (101) for preparing control data for process control; and
a network device (103) for transmitting or receiving the control data using the Simple Network Management Protocol,
wherein the control device further comprises a server and a client for communicating via the communications network using the Simple Network Management Protocol.

2. Control device according to Claim 1, wherein the supply device (101) is constructed to transmit the control data to the network device (103) or to receive the control data from the network device.

3. Control device according to Claim 1 or 2, wherein the network device (103) comprises a program-specific protocol device (105) to be able to execute the Simple Network Management Protocol.

4. Control device according to one of Claims 1 to 3, wherein the network device (103) comprises a transmitter (109) and/or a receiver (107) for communicating via a communications network using the Simple Network Management Protocol.

5. Control device according to one of Claims 1 to 4, wherein the control data comprise process data, process parameters, or control parameters.

6. Control device according to one of Claims 1 to 5, wherein the supply device (101) comprises a memory device for storing the control data in a database.

7. Control system for controlling a first control device and a second control device, wherein the first control device and the second control device are provided for process control using control data and wherein at least one of the control devices comprises the following features:
a supply device for preparing the control data;
a network device for transmitting the control data to the respective other control device via a communications network using the Simple Network Management Protocol; and further
a server and a client for communicating via the communications network using the Simple Network Management Protocol.

8. Use of the Simple Network Management Protocol for communicating control data between a first control device according to one of the claims 1 to 6 and a second control device according to one of the claims 1 to 6 via a communications network.

9. Control method using control data and a control device comprising a server and a client, the control is constructed to communicate as a server and as a client with another control device via a communications network using the Simple Network Management Protocol, wherein a technical process is controlled using the control data, with
preparing the control data for process control; and
transmitting the control data to the other control device or receiving other control data from the other control device using the Simple Network Management Protocol.

10. Program-specific device constructed to be able to execute a computer program for performing one of the methods according to Claim 9.

11. Computer program for performing one of the methods according to Claim 9, when the computer program runs on a computer.

## Revendications

1. Dispositif de commande, conçu pour communiquer en tant que serveur et en tant que client avec un autre dispositif de commande via un réseau de communication en recourant au protocole simple de gestion du réseau, et comprenant :
un dispositif de préparation (101) pour la fourniture de données de commande à la commande de processus ; et
un dispositif de réseau (103) pour l'émission ou la réception des données de commande en recourant au protocole simple de gestion du réseau ;
ledit dispositif de commande comprenant en outre un serveur et un client pour communiquer via le réseau de communication en recourant au protocole simple de gestion du réseau.

2. Dispositif de commande selon la revendication 1, où le dispositif de préparation (101) est conçu pour émettre les données de commande vers le dispositif de réseau (103) pour recevoir les données de commande du dispositif de réseau.

3. Dispositif de commande selon la revendication 1 ou 2, où le dispositif de réseau (103) comprend un dispositif de protocole (105) à programmation prévue pour faire s'exécuter le protocole simple de gestion du réseau.

4. Dispositif de commande selon l'une des revendications 1 à 3, où le dispositif de réseau (103) comprend un émetteur (109) et/ou un récepteur (107) pour la communication via un réseau de communication en recourant au protocole simple de gestion du réseau.

5. Dispositif de commande selon l'une des revendications 1 à 4, où les données de commande comprennent des données de processus, des paramètres de processus ou des paramètres de commande.

6. Dispositif de commande selon l'une des revendications 1 à 5, où le dispositif de préparation (101) comprend un dispositif de mémorisation pour le stockage des données de commande dans une base de données.

7. Système de commande, pour la commande d'un premier et d'un deuxième dispositifs de commande, où le premier et le deuxième dispositifs de commande sont prévus pour la commande de processus en recourant à des données de commande, et où au moins un des dispositifs de commande présente les caractéristiques suivantes :
un dispositif de préparation pour la fourniture des données de commande ;
un dispositif de réseau pour la transmission des données de commande à l'autre dispositif de commande via un réseau de communication en recourant au protocole simple de gestion du réseau ; et en outre
un serveur et un client pour la communication via le réseau de communication en recourant au protocole simple de gestion du réseau.

8. Utilisation du protocole simple de gestion du réseau pour la communication de données de commande entre un premier dispositif de commande selon l'une des revendications 1 à 6 et un deuxième dispositif de commande selon l'une des revendications 1 à 6 via un réseau de communication.

9. Procédé de commande recourant à des données de commande et à un dispositif de commande comprenant un serveur et un client, conçu pour communiquer en tant que serveur et en que client avec un autre dispositif de commande via un réseau de communication en recourant au protocole simple de gestion du réseau ; un processus technique étant commandé en recourant aux données de commande, par :
fourniture des données de commande à la commande de processus ; et
émission des données de commande à l'autre dispositif de commande ou réception d'autres données de commande de l'autre dispositif de commande en recourant au protocole simple de gestion du réseau.

10. Dispositif programmé, conçu pour faire s'exécuter un programme informatique pour l'exécution d'un des procédés selon la revendication 9.

11. Programme informatique pour l'exécution d'un des procédés selon la revendication 9 lorsque ledit programme informatique est exécuté sur un ordinateur.
